# EUROPEAN PATENT APPLICATION

(11) **EP 4 117 295 A1**
(43) Date of publication of application: **11.01.2023**
(21) Application number: 22190325.5
(22) Date of filing: 13.08.2022
(51) Int. Cl.: H04N 21/2668, H04N 21/81, H04N 21/84, H04N 21/45, H04N 21/458, H04N 21/462, H04N 21/438, H04N 21/434, H04N 21/426, H04N 21/262

(54) **SYSTEMS, DEVICES, AND METHODS FOR DELIVERING TARGETED CONTENT TO ONE-WAY SET-TOP-BOX**

(30) Priority: 09.07.2021 IN 202141030964
(71) Applicant: Synamedia Limited, Staines Upon Thames, Middlesex TW18 4EX (GB)
(72) Inventor: Thangarajan, Thiravia Pandiyan, Bangalore (IN); Velusamy, Aswin, Bangalore (IN); Vaithiyanathan, Karthikeyan, Tamilnadu (IN); Ramaiah, Latha, Bengaluru (IN); Adaikalam, Vinose Thilak, Tamil Nadu (IN); Annamalai, Ganesankumar, Bengaluru (IN); Weinbach, Yael, Jerusalem (IL); Miah, Salik, Portsmouth (GB); Nimrod, Reuven, Jerusalem (IL)
(74) Representative: IK-IP LTD

(57) **Abstract**

Techniques for delivering targeted content to a client device (e.g., a set-top-box (STB)) with a tuner, one or more controllers, and a non-transitory memory are described. In accordance with various embodiments, the client device obtains streaming media content in a stream and detects a plurality of transport packets under a packet identifier (PID) in the stream, where the plurality of transport packets is associated with a targeted content delivery service. The client device further identifies metadata corresponding to targeted content of the targeted content delivery service in the plurality transport packets under the PID. The client device then selects a list of targeted content identifiers for the client device based on the metadata and a profile of the client device and downloads the targeted content according to the list of targeted content identifiers.

## Description

### TECHNICAL FIELD

The present disclosure relates generally to transmitting and receiving broadcast data and, more specifically, to delivering targeted content to one-way set-top-boxes.

### BACKGROUND

Many set-top-boxes (STBs) are low-cost devices, e.g., single tuner one-way STBs with limited capacity. To support targeted content delivery, it is impractical for previously existing solutions to add section filters, remux, and/or recording stacks to such devices. As such, there are no previously existing solutions for single tuner one-way STBs to download targeted content (e.g., advertisements or regional sports highlights) at a high bitrate and/or without impacting the live viewing experience.

### BRIEF DESCRIPTION OF THE DRAWINGS

So that the present disclosure can be understood by those of ordinary skill in the art, a more detailed description may be had by reference to aspects of some illustrative embodiments, some of which are shown in the accompanying drawings.
Figure 1 is a block diagram of an exemplary client device for receiving broadcasted multimedia content, in accordance with some embodiments;
Figure 2 is a block diagram of an exemplary multimedia content distribution system, in accordance with some embodiments;
Figures 3A and 3B are diagrams illustrating the packaging of targeted content and corresponding metadata, in accordance with some embodiments;
Figure 4 is a diagram illustrating an exemplary flow for targeted content download, in accordance with some embodiments;
Figures 5A and 5B are diagrams illustrating targeted content and metadata downloaded to client devices, in accordance with some embodiments; and
Figures 6A and 6B are flowcharts illustrating a targeted content delivery method, in accordance with some embodiments.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DESCRIPTION OF EXAMPLE EMBODIMENTS

Numerous details are described in order to provide a thorough understanding of the example embodiments shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices, and circuits have not been described in exhaustive detail so as not to obscure more pertinent aspects of the example embodiments described herein.

### OVERVIEW

In accordance with some embodiments, a targeted content delivery solution uses elementary stream filter(s) to download broadcast data (e.g., audio, video, and/or metadata) into client devices (e.g., single tuner one-way set-top-boxes (STBs)) without impacting the live viewing experience. In some embodiments, a headend encapsulates elements of data such as targeted content and corresponding metadata into one packet identifier (PID) and sends the data to multiple transponders for broadcast. In some embodiments, on the receiving end, a client device (e.g., an STB) includes a targeted content delivery unit that shares a connection with the live viewing pipeline. The targeted content delivery unit obtains and processes targeted content that is relevant to the client device based on the information derived from the metadata and a profile of the client device. The headend can change the metadata packaged in the stream on the fly, e.g., changing attribute(s), targeted profile(s), active campaign(s), and/or delivery window rule(s), etc., and the targeted content being downloaded to the client device would be updated accordingly. As such, a schedule-free targeted content delivery method allows the headend to dynamically adjust the content targeted to different client devices, and each client device can efficiently obtain the targeted content without requiring additional tuners, filters, remux, and/or recording stacks.

In accordance with various embodiments, a targeted content delivery method is performed at a client device (e.g., a set-top-box (STB)) with a tuner, one or more controllers, and a non-transitory memory. The method includes obtaining streaming media content in a stream. The method further includes detecting a plurality of transport packets under a packet identifier (PID) in the stream, where the plurality of transport packets is associated with a targeted content delivery service. The method additionally includes identifying metadata corresponding to targeted content of the targeted content delivery service in the plurality transport packets under the PID. The method also includes selecting a list of targeted content identifiers for the client device based on the metadata and a profile of the client device. The method further includes downloading the targeted content according to the list of targeted content identifiers.

### EXAMPLE EMBODIMENTS

A targeted content delivery unit on a client device in accordance with various embodiments described herein addresses the aforementioned data downloading issues on limited capacity devices. In some embodiments, a client device (e.g., a one-way set-top-box (STB) with a single tuner), upon booting up, tunes to any channel to receive streaming content and detects the presence of the targeted content in the stream, e.g., by looking for any targeted content delivery services associated with the current transponder. In some embodiments, upon detecting the presence of the targeted content, the client device creates a job to receive the packets carrying the targeted content under a packet identifier (PID) by applying filter(s) and device sharing with the live viewing, e.g., sharing a connection with the tuner. The client device further processes headers of packetized elementary stream (PES) packets. Based on the information in the headers and a profile of the client device, the client device identifies targeted content that is relevant to the client device. The client device then downloads and stores the relevant targeted content. As such, the targeted content delivery methods, devices, and systems described herein can be used to distribute and download any broadcasted data. Even a one-way STB with a single tuner can obtain the targeted content without requiring additional tuners, filters, remux, and/or recording stacks, thus improving the efficiency of targeted content delivery.

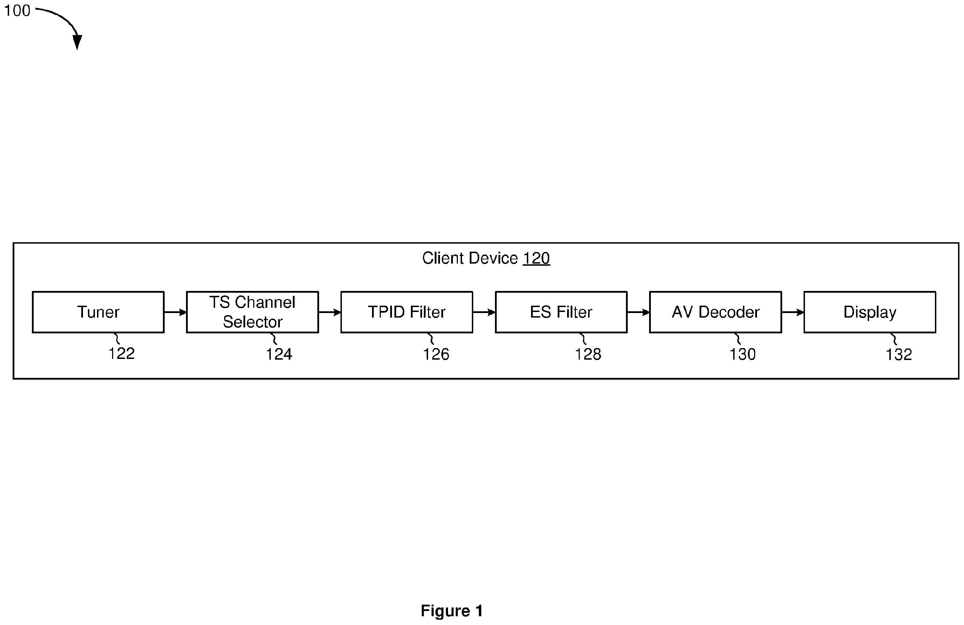

Reference is now made to Figure 1, which is a block diagram 100 of an exemplary client device 120 for receiving broadcasted media content. The exemplary client device 120 can be a set-top-box (STB) and/or a TV. Components of the exemplary client device 120 can be on multiple devices, e.g., the set-top-box (STB) with components 122-130 coupled to the TV with a display 132. The media content (also referred to hereinafter as "multimedia content", "media content item(s)", "media asset", or "content") received by the client device 120 can include any multimedia data, such as visual data, audio data, and/or text, etc. The exemplary client device 120 includes a tuner 122 to tune to the transmission frequency of a respective transponder and a transport stream (TS) channel selector 124 to coordinate with the tuner 122 to obtain stream data corresponding to multiple channels. The exemplary client device 120 further includes a transport packet identifier (TPID) filter 126 to filter certain transport packets (TPs) in the stream based on a packet identifier (PID). The exemplary client device 120 also includes an elementary stream (ES) filter 128 to recover a bitstream and extract a packetized elementary stream (PES) based on a PES identifier, e.g., for a service or a program. The exemplary client device 120 additionally includes an audio/video (AV) decoder 130 to decode the content and a display 132 to display the decoded content.

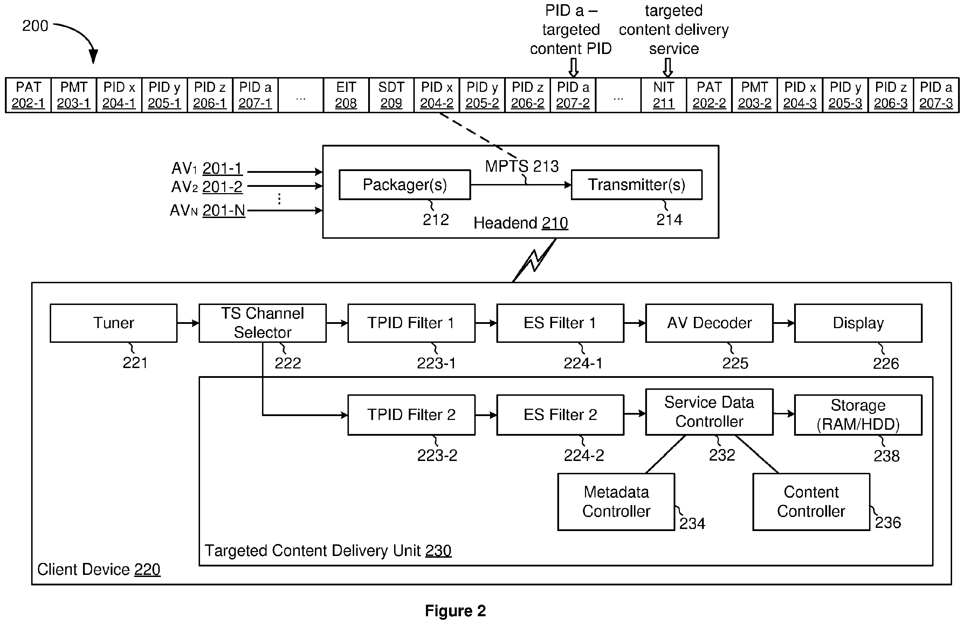

Many single tuner client devices in the field have similar configurations as the client device 120 shown in Figure 1. The components 122-132 in the single tuner client device 120 form a live viewing pipeline for receiving the broadcast content. Currently there is no solution for such devices to download high bitrate targeted content without impacting live viewing through the live viewing pipeline. Some previously existing solutions attempted to add section filters for targeted content delivery. However, such solutions fail once the data bitrate exceeds a few megabits per second. Accordingly, an end-to-end (E2E) system as shown in Figure 2 and described below addresses the targeted content delivery issues on such limited capacity client devices and improves the bitrate for targeted content delivery without impacting the live viewing pipeline.

Figure 2 is a block diagram illustrating an exemplary content distribution system 200, in accordance with some embodiments. In some embodiments, the content distribution system 200 includes an exemplary headend 210 and an exemplary client device 220. One or more packagers 212 of the headend 210 receive multimedia content 201 (e.g., audio/video 1 (AV₁) 201-1, AV₂ 201-2, ..., AV_{N} 201-N in uncompressed format) from content providers and package the multimedia content 201 (e.g., encoding and/or multiplexing) into bitstreams, e.g., packetizing the AV data 201 into packetized elementary streams (PESs), and form an MPEG multi-program transport stream (MPTS) 213 that includes multiplexed streams and a signalization stream for multiple services. One or more transmitter(s) 214 of the headend 210 then modulate a radio frequency (RF) carrier based on the MPTS 213 and transmit the modulated carrier via satellite transponders (not shown).

In Figure 2, the exemplary MPTS 213 includes packets 204-1, 204-2, and 204-3 with PID x (e.g., carrying audio data), packets 205-1, 205-2, and 205-3 with PID y (e.g., carrying video data), packets 206-1, 206-2, and 206-3 with PID z carrying other data, and packets 207-1, 207-2, and 207-3 with PID a that carry the content for targeted content delivery. Further, the exemplary MPTS 213 includes packets for signalization, such as program association tables (PATs) 202-1 and 202-2 (also referred to hereinafter as the PAT 202) and program map tables (PMTs) 203-1 and 203-2 (also referred to hereinafter as the PMT 203) as specified by MPEG. Additionally, the packets for signalization in the exemplary MPTS 213 includes an event information table (EIT) 208, a service description table (SDT) 209, and a network information table (NIT) 211 as specified by the digital video broadcasting (DVB) in the digital video broadcasting - service information (DVB-SI) standard.

The PAT 202 is associated with each transport stream and has a list of programs and the corresponding PMT PIDs. The PMT 203 associated with each channel (also referred to as a service or a program) shows details about the relevant service and the respective types, e.g., indicating the PID of a TS packet in which an image, audio, private, or the like is carried. The SDT 209 is associated with each transport stream and has details about the channel name and other service specific properties, e.g., the type of the EIT 208 sent through each channel, digital copy control information, and the like. In some embodiments, the EIT 208 includes event information (e.g., the start time, duration, and/or parental rating, etc.) and/or the complete event information for multiple days (e.g., 7 days) for large operators. The NIT 211 is associated with each network and has a list of transport streams in the respective network and the corresponding tuning information (e.g., frequency, symbol rate, polarization, etc.).

In some embodiments, as will be described in further detail below, the packager(s) 212 configure targeted content as a program with a single PID and specifies the program as a targeted content delivery service, e.g., by declaring the availabilities of the targeted content delivery service in the NIT 211 and/or other tables in the signalization. For example, the NIT 211 can include a targeted content delivery service notification. Because the targeted content delivery service is associated with each transport stream, in some embodiments, a special descriptor presented in the NIT 211 informs the client device 220 the targeted content delivery service ID, TS ID, and the original network ID to uniquely identify the targeted content delivery service in the network. As such, the NIT 211 carries the information at the transport stream level, and the special descriptor (e.g., a private descriptor) in the NIT 211 describes the DVB triple of the targeted content delivery service within the transport stream. In some embodiments, once configured, the program is sent to a plurality of transponders for distribution and/or broadcast. When the targeted content delivery service is declared and included in the signalization, the content of the targeted content can be updated dynamically, e.g., a schedule-free delivery method.

It should be noted that although the exemplary MPTS is shown following the DVB standard, in the exemplary content distribution system 200, the packager(s) 212 can apply any number of audio and video encoding, compression, and/or packaging techniques pursuant to any standards, including but not limited to, H.264, MPEG-4, Advanced Video Coding (AVC), High Efficiency Video Coding (HEVC), MPEG-2, MP3, AC-3, etc. Accordingly, the client device 220 can be configured to receive broadcast signals transmitted from various types of broadcast systems and according to different broadcast standards, e.g., the DVB standard, the Advanced Television Systems Committee (ATSC) standard, or the like.

On the receiving end, in some embodiments, like the client device 120 shown in Figure 1, the client device 220 includes a single tuner 221, a TS channel selector 222, TPID filter 1 223-1, ES filter 1 224-1, an AV decoder 225, and a display 226. The tuner 221, the TS channel selector 222, the TPID filter 1 223-1, the ES filter 1 224-1, the AV decoder 225, and the display 226 to form a live viewing pipeline for viewing media content as described above with reference to Figure 1. Different from the client device 120 (Figure 1), the client device 220 includes a targeted content delivery unit 230 for downloading targeted content in accordance with some embodiments without impacting the live viewing pipeline.

In some embodiments, the targeted content delivery unit 230 includes TPID filter 2 223-2, ES filter 2 224-2, a service data controller 232, a metadata controller 234, a content controller 236, and a storage 238 (e.g., a non-transitory memory including RAM and/or disk(s)). In some embodiments, the service data controller 232 creates a shared connection with the live viewing and collects the output from ES filter 2 224-2 in PES format for further processing. In some embodiments, the metadata controller 234 requests a list of targeted content by specifying a table identifier (ID), allocates space to store the downloaded metadata, and performs post processing to check the metadata. In some embodiments, the content controller 236 requests targeted content by specifying a targeted content ID, allocates space to store the downloaded targeted content, performs post processing to check the downloaded targeted content, and manages a database (e.g., stored in the storage 238) that stores download status.

Once live viewing starts, e.g., via the live viewing pipeline with the components 221 - 222, 223-1, 224-1, and 225 - 226, the targeted content delivery unit 230 looks for any targeted content service associated with the current transponder by locating the targeted content delivery service entry in the NIT 211 in the MPTS 213 in some embodiments. Having detected the presence of the targeted content delivery service, the targeted content delivery unit 230 configures a targeted delivery pipeline that includes TPID filter 2 223-2, ES filter 2 224-2, the controllers 232 - 236, and the storage 238. In some embodiments, to create the targeted content delivery pipeline, the targeted content delivery unit 230 creates a new job by device sharing with the live viewing pipeline. The new job processes the output from ES filter 2 224-2 for the service data controller 232 to process. The service data controller 232 then interacts with the metadata controller 234 and the content controller 236 to extract and process the metadata and the targeted content. The targeted content delivery unit 230 then stores the processed targeted content in the storage 238 in preparation for presentation by the display 226. In some embodiments, the playback of the targeted content includes reading the stored data from the storage 238, passing the data to the AV decoder 225, and presenting the decoded data on the display 226.

Using the exemplary client device 220 in the exemplary content distribution system 200, targeted content can be downloaded at a high bitrate without impacting the live viewing experience. The data associated with targeted content are identified with a PID at the transport stream level. TPID filter 2 223-2 filters the specific PID associated with the targeted content (e.g., packets 207-1, 207-2, and 207-3 with PID a) and collects section data and the PES data. Relative to some previously existing solutions that attempt to download targeted content using section filters (e.g., by downloading the targeted content from the section data), using ES filter 2 224-2 to collect the PES data encapsulating the targeted content can support higher bitrate. Further, using the exemplary client device 220, any data, e.g., advertisement assets, metadata, sports highlights, etc., can be distributed efficiently without requiring complex processing such as re-mux, chunking input and output (e.g., on personal video recorder (PVR) capable devices). As such, the client device 220 can download the targeted content within its capacity at a high bitrate without requiring additional tuners, filters, remux, and/or recording stacks.

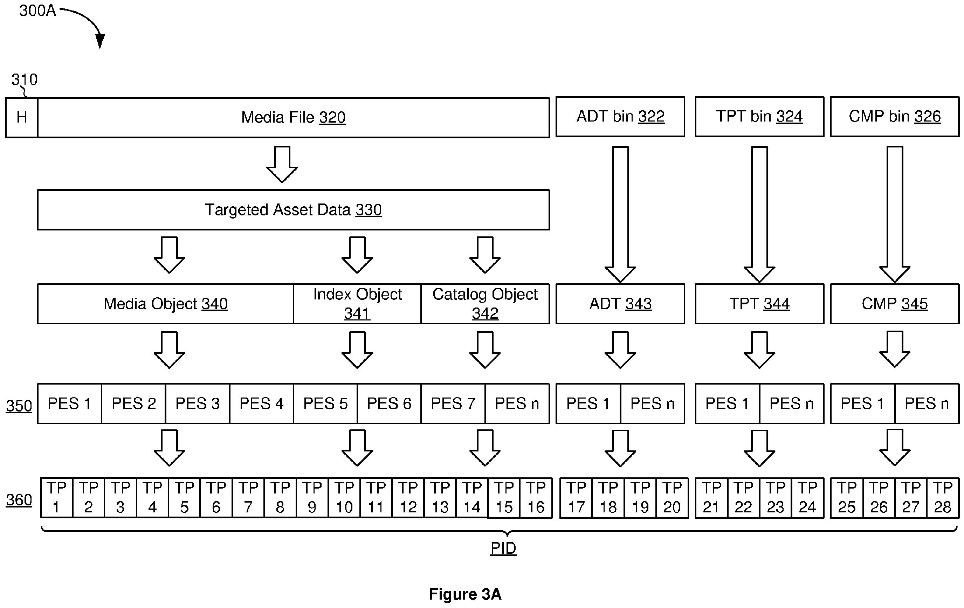

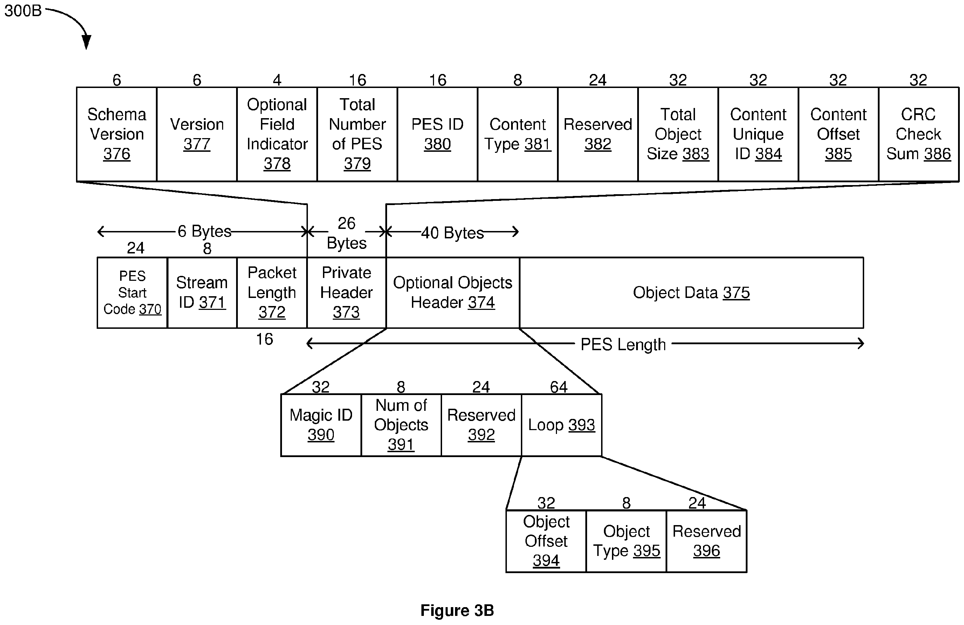

Figures 3A and 3B are diagrams 300A and 300B illustrating the packaging of targeted content and corresponding metadata, in accordance with some embodiments. In some embodiments, the packets are prepared by a packager at a headend, e.g., the packager 212 at the headend 210, Figure 2. In some embodiments, as shown in the diagram 300A, the packager obtains a header 310, a media file 320, and metadata. In some embodiments, the metadata includes attributes for targeted content stored in the attributing definition table (ADT) bin 322, targeted profiles (e.g., profile definitions as expressions on the attributes) stored in the targeted profile table (TPT) bin 324, and active campaign data in the system stored in the campaign manifest table (CMP) bin 326. For example, the ADT bin 322 can include "hasCat" as an attribute indicating whether there is an active campaign and the TPT bin 324 can include a corresponding expression "hasCat=true" to indicate the targeted profiles for receiving active targeted content have "true" as the value for "hasCat" attribute.

In some embodiments, the packager further converts the media file 320 to targeted asset data 330, which further includes data elements such as a media object 340, an index object 341, and a catalog object 342. In some embodiments, the media object 340 includes a single program transport stream of audio/video (AV) data. In some embodiments, the index object 341 includes the indexing format used for trick mode operations. In some embodiments, the catalog object 342 includes the presentation timestamp (PTS) of the targeted content. Likewise, the packager also converts the data in the ADT bin 322, TPT bin 324, and CMP bin 326 into data objects, e.g., an ADT object 343, a TPT object 344, and a CMP object 345. Further, the packager generates a playlist of the targeted content and the corresponding metadata and encapsulates the data objects 340 - 345 in the playlist into a PES 350, e.g., a plurality of bounded PES packets. An exemplary format of a PES packet is shown in Figure 3B and described in further detail below.

In some embodiments, the packager also converts the PES packets for the targeted content in the PES 350 into a plurality of TPs 360 (e.g., each TP includes 188 bytes) under a single PID. In some embodiments, as described above with reference to Figure 2, the packager further configures the single PID program as a targeted content delivery service (e.g., by specifying in the NIT 211, Figure 2), multiplexes multiple streams and the signalization stream, and sends the multiplexed stream (e.g., the MPTS 213, Figure 2) to a plurality of transponders for broadcast. As such, the headend prepares the targeted content (e.g., in the recorded format) and encapsulates the targeted content into a single PID and broadcasts through a plurality of transponders. On the receiving end, the broadcast is received by a plurality of client devices and data elements that are relevant to a respective client device (e.g., determined based on the metadata and a profile of the client device) would be downloaded, processed, and stored.

It should be noted that the packaging format as shown in Figure 3A is one embodiment, other formats may be used for similar purposes. Further, the elements illustrated in and described with respect to Figure 3A may not be mandatory and thus some may be omitted in certain embodiments. Additionally, some embodiments can include further, additional, and/or different elements beyond those illustrated in and described with respect to Figure 3A. For example, additional metadata may be obtained and placed in additional table(s), e.g., a delivery window rule (DWR) table with metadata specifying the delivery window of the targeted content. Likewise, the diagram 300B illustrating the exemplary format of a PES packet in Figure 3B is for illustrative purposes. Other formats may be used for similar purposes.

In Figure 3B, pursuant to MPEG DVB standard, the exemplary PES packet is 64 Kbyte except for the last PES packet of the asset. Further pursuant to MPEG DVB standard, each PES carries 32 bytes of PES header fields, e.g., a 24-bit PES start code 370, an 8-bit stream ID field 371, a 16-bit packet length field 372, a 26-byte private header 373, a 40-byte optional objects header 374, and object data 375. In some embodiments, for the PES packets associated with the targeted content (e.g., the packets in the PES 350 in Figure 3A), the PES start code 370 has a value of 0x00001 indicating the start of a PES packet, the stream ID 371 field has a value of 0xBF indicating it is a private stream, and the packet length field 372 indicates the number of bytes remaining in the PES packet after the packet length field 372.

In some embodiments, the private header 373 is present for a PES packet that carries targeted content data and describes the targeted content and its position. In some embodiments, a 6-bit schema version field 376 in the private header 373 specifies the version of the targeted content packaging syntax. In some embodiments, a 6-bit version field 377 in the private header 373 specifies the version of the metadata table, e.g., the version of the ADT, TPT, CMP, and/or DWR. In some embodiments, a 4-bit optional field indicator 378 in the private header 373 indicates if any optional field is present, e.g., 0x0000 indicating no optional field, 0x0001 indicating the presence of the optional field, and 0xXXX0 indicating reserved. In some embodiments, a 16-bit total number of PES field 379 in the private header 373 specifies the number of PES packets (including this PES packet) that the client device acquires for a complete object. In some embodiments, a 16-bit PES ID field 380 in the private header 373 specifies the sequence number for the respective PES packet. In some embodiments, the starting PES packet sets the PES ID field 380 to 0.

In some embodiments, an 8-bit content type field 381 in the private header 373 indicates the type of content carried by the PES packet. For example, for a PES packet carrying the asset data, e.g., carrying the targeted asset data 330 (Figure 3A), the packager sets the content type field 381 to 0x01. In another example, for a PES packet carrying the ADT data (e.g., the ADT object 343, Figure 3A), the TPT data (e.g., the TPT object 344, Figure 3A), the CMP data (e.g., the CMP object 345, Figure 3A), and the DWR data, the content type field 381 are set to 0x02, 0x03, 0x04, and 0x05 respectively. In some embodiments, a 24-bit reserved field 382 in the private header 373 is reserved for future use.

In some embodiments, a 32-bit total object size field 383 in the private header 373 indicates the total size of the object, where the instant PES packet is a part of. For example, when the content type field 381 is 0x01, the total object size field 383 represents the total size of the media object 340 (Figure 3A), the index object 341 (Figure 3A), and/or the catalog object 342 (Figure 3A). In another example, when the content type field 381 is 0x02, the total object size field 383 represents the size of the ADT object 343 (Figure 3A). In still another example, when the content type field 381 is 0x03, the total object size field 383 represents the size of the TPT object 344 (Figure 3A). In yet another example, when the content type field 381 is 0x04, the total object size field 383 represents the size of the CMP object 345 (Figure 3A). In some embodiments, when the content type field 381 is 0x05, the total object size field 383 represents the size of DWR object. In some embodiments, the client device allocates contiguous memory according to the size indicated in the total object size field 383 so that pieces of the entire object can be stored together when a plurality of PES packets for the objects is acquired.

In some embodiments, a 32-bit content unique ID field 384 in the private header 373 carries the unique ID of the targeted content that is cross referenced in the CMP table. In some embodiments, for packets that carry the metadata, the content unique ID field 384 is set to OXFFFFFFFF. In some embodiments, a 32-bit content offset field 385 in the private header 373 specifies the offset of the data carried by the instant PES packet in the object. In some embodiments, for post processing check and/or validation, a 32-bit cyclic redundancy check (CRC) field 386 in the private header 373 carries the CRC checksum for the object data in the respective PES. In some embodiments, CRC32 is used for calculating the CRC value.

In some embodiments, the optional objects header field 374 is used to describe sub object files when a target content asset splits into multiple sub object files, e.g., the media file 320 in Figure 3A splitting into multiple sub object files. In some embodiments, the optional objects header field 374 is present in the first PES packet of the media object so that during post processing, the optional sub objects can be extracted from the media object. In some embodiments, a 32-bit magic ID field 390 in the optional objects header field 374 indicates the start of the optional objects header field 374. In some embodiments, an 8-bit number of objects field 391 indicates the number of entries in the optional objects header field 374. Following a 24-bit reserved field 392 (e.g., reserved for future use), a 64-bit loop field 393 in the optional objects header field 374 has one entry for each optional object. In some embodiments, each entry in the loop 393 includes a 32-bit object offset field 394, an 8-bit object type 395, and a 24-bit reserved field 396. In some embodiments, the object offset 394 specifies the byte offset of the optional object in the object file. In some embodiments, the object type field 395 specifies the type of the optional object, e.g., 0x01 corresponding to the media object 340 (Figure 3A), 0x02 corresponding to the index object 341 (Figure 3A), 0x03 corresponding to the catalog object 342 (Figure 3A), and 0x04 corresponding to the end of the file, etc.

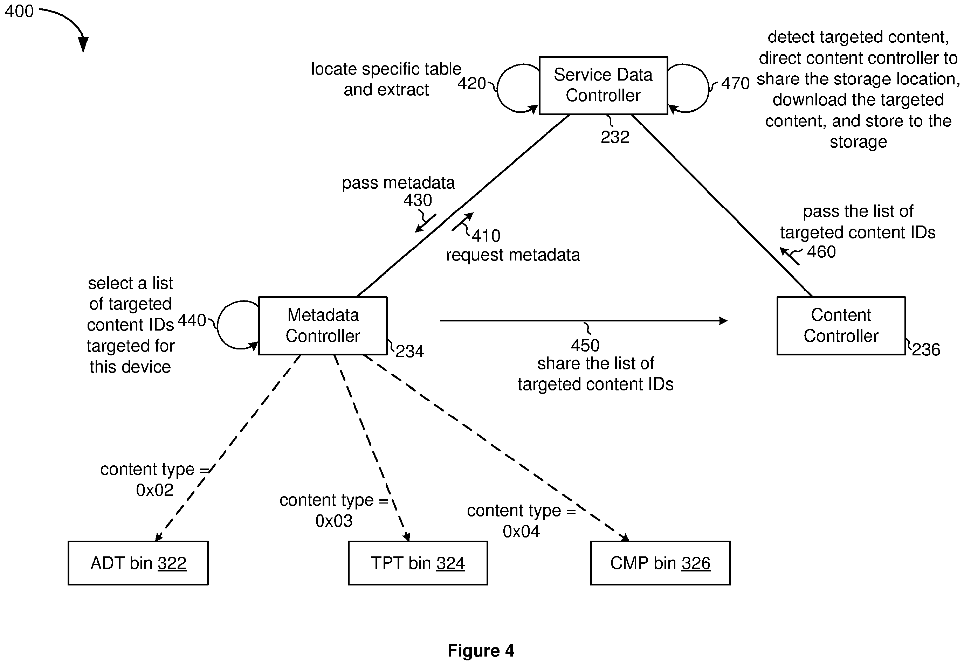

Figure 4 is a diagram illustrating a flow 400 for targeted content download by the exemplary client device 220 in the exemplary content distribution system 200 in accordance with some embodiments. In some embodiments, once booting up the client device, the client device tunes to any channel that a user selects, e.g., via the tuner 221 in Figure 2. The client device then looks for the presence of targeted content delivery service, e.g., in the NIT 211 in Figure 2. Upon detecting the targeted content delivery service (e.g., located in the NIT based on the DVB triplet), the client device creates a new job by device sharing with the live viewing, so that the service data controller 232 can get the targeted content delivery service and start getting the PES output from the ES filter (e.g., getting the PES output from the ES filter 2 224-2 in Figure 2).

In some embodiments, in step 410, the metadata controller 234 requests for metadata from the service data controller 232, e.g., requesting the ADT, the TPT, the CMP, and/or the DWR. The service data controller 232, upon receiving the request, locates the tables based on the table IDs and extracts the table information from the PES packets in step 420. For example, the service data controller 232 locates and extracts the ADT data in the PES with the content type 381 (Figure 3B) of 0x02, the TPT data with the content type (Figure 3B) of 0x03, and the CMP data with the content type 381 (Figure 3B) of 0x04 in the private header 373 (Figure 3B). The service data controller 232 further shares the extracted metadata with the metadata controller 234 in step 430. In some embodiments, the metadata controller 234 allocates space (e.g., in the storage 238, Figure 2) to store the downloaded metadata, e.g., storing the metadata in the ADT bin 322, the TPT bin 324, and the CMP bin 326.

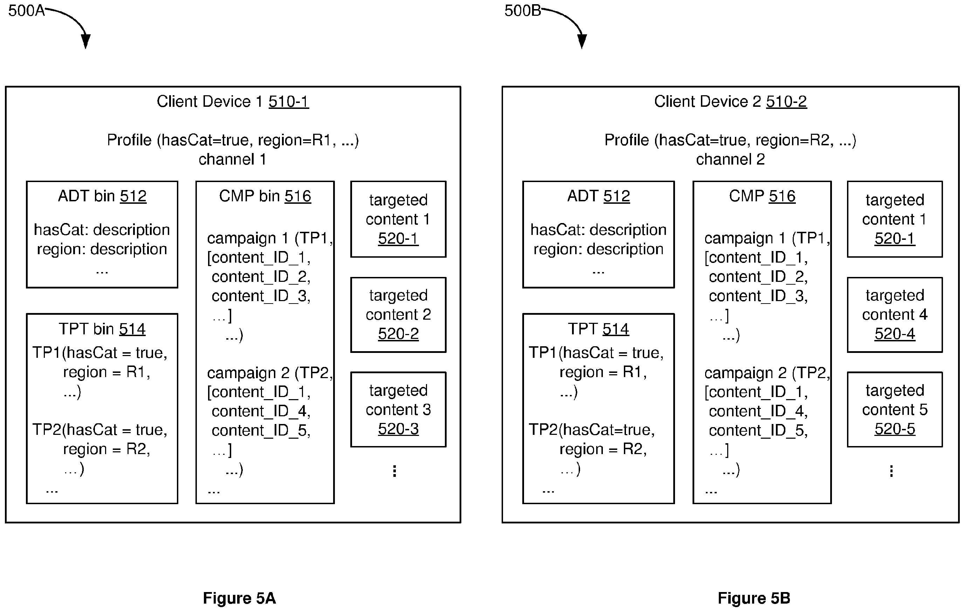

In some embodiments, in step 440, the metadata controller 234 processes the metadata to select a list of targeted content identifiers targeted for the client device based on the metadata and a profile of the client device (e.g., a profile stored in the storage 238 in Figure 2). Examples of matching the metadata and the profile for deriving the list of targeted content identifiers are illustrated in Figures 5A and 5B and described in further detail below. The metadata controller 234 then passes the list of targeted content identifiers to the content controller 236 in step 450. In some embodiments, the content controller 236 passes the list to the service data controller 232 in step 460 to request the service data controller 232 to look for the targeted content in the PES, e.g., by specifying the value of the content unique ID 384 (Figure 3B). In some embodiments, the content controller 236 allocates space to store the downloaded targeted content and maintains the storage location for the downloaded content. In some embodiments, in step 470, once the service data controller 232 detects the targeted content in the PES, the service data controller 232 directs the content controller 236 to share the storage location for the requested targeted content, so that the service data controller 232 can store the targeted content in the allocated space in the storage 238 (Figure 2).

Figures 5A and 5B are diagrams 500A and 500B illustrating targeted content and metadata downloaded to client device 1 510-1 and client device 2 510-2 following the flow 400 illustrated in Figure 4 in accordance with some embodiments. Different client devices can have different profiles. For example, client device 1 510-1 is associated with a profile indicating client device 1 510-1 is configured to receive targeted content in the catalog and its region value is R1, denoted as hasCat=true and region=R1. Like client device 1 510-1, client device 2 510-2 is associated with a profile indicating client device 2 510-2 is configured to receive targeted content in the catalog, e.g., hasCat=true. Different from client device 1 510-1, the profile for client device 2 510-2 indicates that client device 2 510-2 is in a different region R2, denoted as region=R2.

As explained above with reference to Figure 2, the headend 210 packages the targeted content and the metadata and sends to a plurality of transponders. Specifically, as described above with reference to Figure 3A, the headend packages metadata into the ADT object 343, the TPT object 344, and the CMP object 345 along with the media objects 340, the index object 341, and the catalog object 342. The packetized metadata and the targeted content are broadcasted via a plurality of transponders. When the client devices 510-1 and 510-2 (collectively referred to hereinafter as the client devices 510) boot up and tune to any channel (e.g., channel 1 on client device 1 510-1 and channel 2 on client device 2 510-20), following the flow 400 illustrated in Figure 4, each of the client devices 510 obtains an ADT bin 512, a TPT bin 514, and a CMP bin 516.

In the examples shown in Figures 5A and 5B, the ADT bin 512 has a list of attributes for targeting, such as attributes hasCat and region and the corresponding description in accordance with some embodiments. The TPT bin 514 has the targeted profile definition as an expression on the attributes, such as a first targeted profile TP1 targeting client devices with attribute values hasCat=true and region=R1 and a second targeted profile TP2 targeting client devices with attribute values hasCat=true and region=R2. The CMP bin 516 has a list of active campaigns in the system, such as a first active campaign, denoted as campaign 1, and a second active campaign, denoted as campaign2. The first active campaign targets the first targeted profile TP1 with a list of targeted content, e.g., [content_ID_1, content_ID_2, content_ID_3, ...], and the second active campaign targets the second targeted profile TP2 with a different list of targeted content, e.g., [content_ID_1, content_ID_4, content_ID_4, ...].

Because client device 1 510-1 is in region R1 and hasCat is set to true, the metadata controller 234 (Figure 4) cross references the metadata in the ADT bin 512, the TPT bin 514, the CMP bin 516, and the profile of client device 1 510-1 to derive the list of targeted content IDs, e.g., [content_ID_1, content_ID_2, content_ID_3, ...]. Client device 1 510-1 in Figure 5A thus downloads at least targeted content 1 520-1, targeted content 2 520-2, and targeted content 3 520-3 in campaign1 targeting client devices with profile TP1. In contrast, because client device 2 510-2 is in region R2 and hasCat is set to true, the metadata controller 234 (Figure 4) cross references the metadata in the ADT bin 512, the TPT bin 514, the CMP bin 516, and the profile of client device 2 510-2 to derive the list of targeted content IDs, e.g., [content_ID_1, content_ID_4, content_ID_4, ...]. Client device 2 510-2 in Figure 5B thus downloads at least targeted content 1 520-1, targeted content 4 520-4, and targeted content 5 520-5 in campaign2 targeting client devices with profile TP2. As such, each of the client devices 510 can obtain respective targeted content from campaign(s) targeting to the respective client profile.

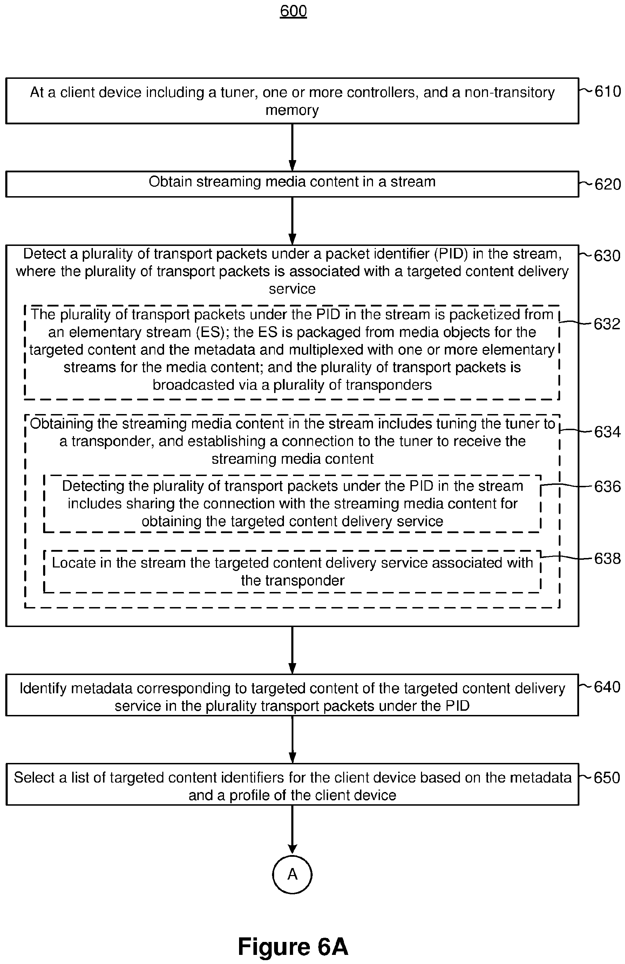

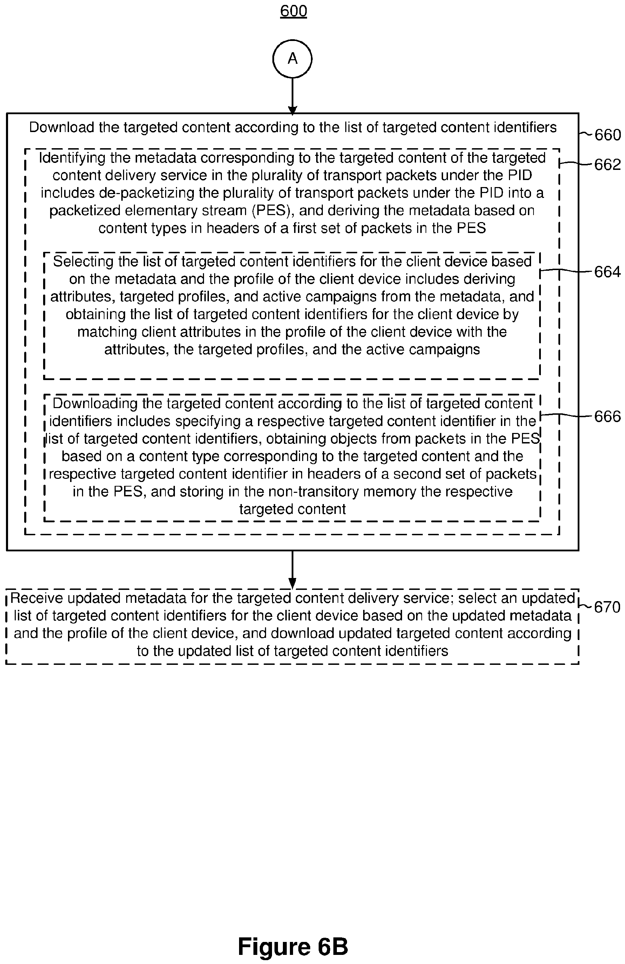

Figures 6A and 6B are flowcharts illustrating a targeted content delivery method 600 in accordance with some embodiments. In some embodiments, as represented by block 610, the targeted content delivery method 600 is performed at a client device (e.g., the client device 220, Figure 2) that includes a tuner (e.g., the single tuner 221, Figure 2). In some embodiments, the client device further includes one or more controllers (e.g., the service data controller 232, the metadata controller, and/or the content controller 236, Figure 2) coupled to the tuner (e.g., in the targeted content delivery unit 230 coupled to the tuner 221, Figure 2), and a non-transitory memory (e.g., the storage 238, Figure 2) coupled to the one or more controllers.

The method 600 begins with the client device obtaining streaming media content in a stream, as represented by block 620, and continues with the client device detecting a plurality of transport packets under a packet identifier (PID) in the stream, where the plurality of transport packets is associated with a targeted content delivery service, as represented by block 630. In some embodiments, as represented by block 632, the plurality of transport packets under the PID in the stream is packetized from an elementary stream (ES), where the ES is packaged from media objects for the targeted content and the corresponding metadata and multiplexed with one or more elementary streams for the media content. The plurality of transport packets is broadcasted via a plurality of transponders in accordance with some embodiments.

For example, in Figure 3A, the headend (e.g., the headend 210 with the packager 212 in Figure 2) packages the media file 320 for the targeted content, where the media file 320 includes the targeted asset data 330, which further includes the media object 340, the index object 341, and the catalog object 342. The headend also packages the corresponding metadata from the ADT bin 322, the TPT bin 324, and the CMP bin 326 into the ADT object 343, the TPT object 344, and the CMP object 345. The headend then generates the bounded PES 350 and converts the PES packets into the transport packets in the transport stream 360 that have the same PID.

In some embodiments, as represented by block 634, obtaining the streaming media content in the stream includes tuning the tuner to a transponder, and establishing a connection to the tuner to receive the streaming media content. For example, in Figure 2, once booting up the client device 220 and the tuner 221 tuning to any channel, a connection is established to receive the streaming media content broadcasted by the transponder, e.g., via a live viewing pipeline including the tuner 221, the TS channel selector 222, TPID filter 1 223-1, ES filter 1 224-1, the AV decoder 225, and the display 226.

In such embodiments, as represented by block 636, detecting the plurality of transport packets under the PID in the stream includes sharing the connection with the streaming media content for obtaining the targeted content delivery service. Further in such embodiments, as represented by block 638, the method 600 includes locating in the stream the targeted content delivery service associated with the transponder in accordance with some embodiments. For example, in Figure 2, the targeted content download pipeline in the targeted content delivery unit 230 shares a connection with the live viewing pipeline. Further, in Figure 2, in the exemplary multiplexed transport stream 213 that includes packets for both the live viewing and the targeted content, the targeted content delivery service is specified in the NIT 211 so that the targeted content delivery unit 230 can detect the presence of the targeted content delivery service and/or the targeted content in the multiplexed transport stream 213.

The method 600 continues with the client device identifying metadata corresponding to targeted content of the targeted content delivery service in the plurality transport packets under the PID, as represented by block 640. The method 600 also includes selecting a list of targeted content identifiers for the client device based on the metadata and a profile of the client device, as represented by block 650. Turning to Figure 6B, the method 600 additionally includes downloading the targeted content according to the list of targeted content identifiers, as represented by block 660.

In Figure 6B, as represented by block 662, in some embodiments, identifying the metadata corresponding to the targeted content of the targeted content delivery service in the plurality of transport packets under the PID includes de-packetizing the plurality of transport packets under the PID into a packetized elementary stream (PES), and deriving the metadata based on content types in headers of a first set of packets in the PES. For example, in Figure 3A. upon receiving the transport stream 360, the client device de-packetizes the TPs in the transport stream 360 under the same PID to obtain the PES 350. Further, the client device derives the metadata objects 343 - 345 based on the value in the content type field 381 in the PES packet header as shown in Figure 3B.

In some embodiments, as represented by block 664, selecting the list of targeted content identifiers for the client device based on the metadata and the profile of the client device includes deriving attributes, targeted profiles, and active campaigns from the metadata, and obtaining the list of targeted content identifiers for the client device by matching client attributes in the profile of the client device with the attributes, the targeted profiles, and the active campaigns.

For example, in Figure 4, the metadata controller 234 requests the metadata from the service data controller 232 in step 410, e.g., by requesting tables with content type of 0x02, 0x03, and/or 0x04, etc. In response to the request, in step 420, the service data controller 232 derives attributes in the ADT bin 322 from PES packets with 0x02 in the content type field 381 (Figure 3B), derives targeted profiles in the TPT bin 324 from PES packets with 0x03 in the content type field 381, derives active campaigns in the CMP bin 325 from PES packets with 0x04 in the content type field 381, and/or derives the delivery window rules in the DWR (not shown) from PES packets with 0x05 in the content type field 381. In step 440, after receiving the metadata from the service data controller 232, the metadata controller 234 selects a list of targeted content IDs targeted for the client device by cross referencing the metadata and the profile of the client device.

In the example shown in Figure 5A, the metadata controller selects the list [content_ID_1, content_ID_2, content_ID_3, ...] by matching client attributes in the profile, e.g., hasCat=true, region=R1, etc., with the attributes in the ADT 512 (e.g., matching the attribute hasCat), the targeted profiles in the TPT 514 (e.g., matching TP1), and the active campaigns in the CMT 516 (e.g., matching campaign 1). In the example shown in Figure 5B, the metadata controller selects the list [content_ID_1, content_ID_4, content_ID_5, ...] by matching client attributes in the profile, e.g., hasCat=true, region=R2, etc., with the attributes in the ADT 512 (e.g., matching the attribute hasCat), the targeted profiles in the TPT 514 (e.g., matching TP2), and the active campaigns in the CMT 516 (e.g., matching campaign 2).

In some embodiments, as represented by block 666, downloading the targeted content according to the list of targeted content identifiers includes specifying a respective targeted content identifier in the list of targeted content identifiers, obtaining objects from packets in the PES based on a content type corresponding to the targeted content and the respective targeted content identifier in headers of a second set of packets in the PES, and storing in the non-transitory memory the respective targeted content. For example, in step 460 of Figure 4, the content controller 236 passes the list of targeted content IDs to the service data controller 232. Further, in Figure 4, in step 470, the service data controller 232 detects the targeted content in the packets according to the list of targeted content IDs, e.g., based on the value of 0x01 in the content type field 381 (Figure 3B) and the content unique ID field 384 (Figure 3B) in a PES packet header matching a targeted content ID in the list of targeted content IDs. Also as shown in Figure 4, in step 470, the service data controller 232 then requests the content controller 236 to share the storage location allocated for the targeted content, downloads the targeted content, and stores the targeted content at the designated location in the storage, e.g., in the storage 238 in Figure 2.

In some embodiments, as represented by block 670, the method 600 further includes receiving updated metadata for the targeted content delivery service, selecting an updated list of targeted content identifiers for the client device based on the updated metadata and the profile of the client device, and downloading updated targeted content according to the updated list of targeted content identifiers. In other words, the targeted content delivery method 600 described herein allows a schedule-free delivery to dynamically change the delivery of targeted content for single tuner one-way client devices. Once updated at the headend, e.g., updating the ADT bin 322, the TPT bin 324, and/or the CMP bin 326 in Figure 3A, the targeted content delivery unit 230 (Figure 2) can update the targeted content being downloaded to the respective client device according to the updated metadata, e.g., selecting a different list of targeted content IDs and downloading a different set of targeted content according to the updated list of targeted content IDs.

While various aspects of implementations within the scope of the appended claims are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first device could be termed a second device, and, similarly, a second device could be termed a first device, which changing the meaning of the description, so long as all occurrences of the "first device" are renamed consistently and all occurrences of the "second device" are renamed consistently. The first device and the second device are both devices, but they are not the same device.

The terminology used herein is for the purpose of describing particular embodiments only and is not intended to be limiting of the claims. As used in the description of the embodiments and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting", that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
at a client device including a tuner, one or more controllers, and a non-transitory memory:
obtaining streaming media content in a stream;
detecting a plurality of transport packets under a packet identifier (PID) in the stream, wherein the plurality of transport packets is associated with a targeted content delivery service;
identifying metadata corresponding to targeted content of the targeted content delivery service in the plurality transport packets under the PID;
selecting a list of targeted content identifiers for the client device based on the metadata and a profile of the client device; and
downloading the targeted content according to the list of targeted content identifiers.

2. The method of claim 1, wherein:
the plurality of transport packets under the PID in the stream is packetized from an elementary stream (ES);
the ES is packaged from media objects for the targeted content and the metadata and multiplexed with one or more elementary streams for the media content; and
the plurality of transport packets is broadcasted via a plurality of transponders.

3. The method of claim 1, wherein obtaining the streaming media content in the stream includes:
tuning the tuner to a transponder; and
establishing a connection to the tuner to receive the streaming media content.

4. The method of claim 3, wherein detecting the plurality of transport packets under the PID in the stream includes:
sharing the connection with the streaming media content for obtaining the targeted content delivery service.

5. The method of claim 3, further comprising:
locating in the stream the targeted content delivery service associated with the transponder.

6. The method of claim 1, wherein identifying the metadata corresponding to the targeted content of the targeted content delivery service in the plurality of transport packets under the PID includes:
de-packetizing the plurality of transport packets under the PID into a packetized elementary stream (PES); and
deriving the metadata based on content types in headers of a first set of packets in the PES.

7. The method of claim 6, wherein selecting the list of targeted content identifiers for the client device based on the metadata and the profile of the client device includes:
deriving attributes, targeted profiles, and active campaigns from the metadata; and
obtaining the list of targeted content identifiers for the client device by matching client attributes in the profile of the client device with the attributes, the targeted profiles, and the active campaigns.

8. The method of claim 6, wherein downloading the targeted content according to the list of targeted content identifiers includes:
specifying a respective targeted content identifier in the list of targeted content identifiers;
obtaining objects from packets in the PES based on a content type corresponding to the targeted content and the respective targeted content identifier in headers of a second set of packets in the PES; and
storing in the non-transitory memory the respective targeted content.

9. The method claim 1, further comprising:
receiving updated metadata for the targeted content delivery service;
selecting an updated list of targeted content identifiers for the client device based on the updated metadata and the profile of the client device; and
downloading updated targeted content according to the updated list of targeted content identifiers.

10. A device comprising:
a tuner;
a non-transitory memory; and
one or more controllers configured to:
obtain streaming media content in a stream;
detect a plurality of transport packets under a packet identifier (PID) in the stream, wherein the plurality of transport packets is associated with a targeted content delivery service;
identify metadata corresponding to targeted content of the targeted content delivery service in the plurality transport packets under the PID;
select a list of targeted content identifiers for the client device based on the metadata and a profile of the client device; and
download the targeted content according to the list of targeted content identifiers.

11. The device of claim 10 arranged to perform a method according to any of claims 2 to 9.

12. A non-transitory memory storing one or more programs, which, when executed by one or more controllers of a device with a tuner, cause the device to:
obtain streaming media content in a stream;
detect a plurality of transport packets under a packet identifier (PID) in the stream, wherein the plurality of transport packets is associated with a targeted content delivery service;
identify metadata corresponding to targeted content of the targeted content delivery service in the plurality transport packets under the PID;
select a list of targeted content identifiers for the client device based on the metadata and a profile of the client device; and
download the targeted content according to the list of targeted content identifiers.

13. The non-transitory memory of claim 12, wherein:
the plurality of transport packets under the PID in the stream is packetized from an elementary stream (ES);
the ES is packaged from media objects for the targeted content and the metadata and multiplexed with one or more elementary streams for the media content; and
the plurality of transport packets is broadcasted via a plurality of transponders.
